# FASCICULE DE BREVET EUROPEEN

(11) **EP 0 779 207 B1**
(45) Date de publication et mention de la délivrance du brevet: **29.03.2000**
(21) Numéro de dépôt: 96402666.0
(22) Date de dépôt: 09.12.1996
(51) Int. Cl.: B64D 13/00, B64D 11/00

(54) **Dispositif humidificateur pour cabine d'aéronef**
Befeuchtigungsvorrichtung für eine Flugzeugkabine
Humidification for an aircraft cabin

(30) Priorité: 12.12.1995 FR 9514704
(43) Date de publication de la demande: 18.06.1997
(73) Titulaire: Intertechnique, 78374 Plaisir Cedex (FR)
(72) Inventeur: Bardel, Michel, 78310 Maurepas (FR)
(74) Mandataire: Fort, Jacques

(56) Documents cités:
- EP-A- 0 603 064
- WO-A-91/07208
- DE-A- 2 832 416
- DE-A- 19 500 343
- US-A- 1 331 384

## Description

L'invention concerne le conditionnement d'air pour aéronefs susceptibles de voler à altitude élevée et comportant un système de pressurisation de cabine.

Un tel système est alimenté en air extérieur, prélevé par exemple à partir du compresseur d'un turboréacteur. Il porte l'air à une pression suffisante pour les besoins respiratoires des occupants et augmente sa température.

A titre d'exemple, un avion volant à 11500 m d'altitude baigne dans une atmosphère à 206 millibars et - 56°C. Le système de pressurisation de cabine fait passer la pression à 810 millibars et à une température de 22°C. Le degré hygrométrique de l'air à haute altitude est très faible. En conséquence, l'humidité relative de l'air introduit dans la cabine est nettement inférieure à 1 %, alors qu'une humidité relative de 40 à 60 % est souhaitable pour le confort des occupants. La vapeur d'eau rejetée par les occupants et la désorption des matériaux de la cabine sont très insuffisants pour se rapprocher de cette valeur.

On pourrait penser que le problème peut être résolu en injectant de la vapeur d'eau dans le système de pressurisation et de distribution d'air. Mais une humidification globale de l'air de la cabine nécessite une masse d'eau inacceptable pour les vols de longue durée. De plus, un tel système présente de graves défauts techniques et sanitaires. La maintenance est importante et la fiabilité est réduite, du fait notamment de l'oxydation des canalisations, de la corrosion provoquée par les condensations et des dépôts minéraux. Du point de vue sanitaire, le brassage de l'air humide dans la cabine et au travers de canalisations de climatisation favorise le développement de bactéries, la contamination microbienne et une prolifération de mousse.

La pulvérisation d'eau dans la cabine d'un avion, lorsqu'elle est envisagée, est prévue pour le cas d'incendie (WO-A-91/07208), c'est-à-dire de façon exceptionnelle.

On connait par ailleurs (EP-A-0 603 064) un diffuseur de fines particules d'eau dans l'ensemble de l'habitacle d'un véhicule pour le refroidir et un dispositif comportant un réservoir d'eau et une pompe actionnable pour envoyer de l'eau à une buse de diffusion dans un véhicule.

La présente invention vise à fournir une cabine munie d'un dispositif permettant d'améliorer le confort des occupants par augmentation du degré hygrométrique de l'air à leur contact, sans pour autant présenter les inconvénients ci-dessus.

Dans ce but l'invention propose notamment une cabine d'aéronef munie d'un dispositif d'humidification selon la revendication 1. L'eau atomisée s'évapore d'autant plus facilement que l'air ambiant de la cabine est sec.

Les buses d'atomisation peuvent être installées dans le dossier des sièges de passager, le plafond, la partie inférieure des coffres à bagages, l'épaisseur d'une cloison.

Dans un mode avantageux de réalisation de l'invention, l'eau destinée à chaque occupant est stockée localement avec ses moyens de pressurisation dans une cartouche amovible pour constituer un équipement autonome. Une telle disposition est optionnelle à chaque place et elle peut être facilement étendue à un parc d'avions existant. Il n'est pas nécessaire d'installer un circuit complexe de distribution d'eau sous pression. La panne éventuelle d'un équipement n'entrave pas le fonctionnement des autres. La masse de l'ensemble du dispositif se répartit sur l'avion en fonction de la distribution des sièges et ne modifie pas fortement le centrage. Enfin, la certification aéronautique peut être obtenue en ne présentant qu'un dossier ne concernant que les sièges, le plafonnier ou la cloison. Elle n'implique pas une nouvelle certification du système de conditionnement d'air dans son ensemble.

Dans un autre mode de réalisation de l'invention, les buses d'atomisation sont alimentées par un circuit alimenté à partir d'un réservoir commun d'eau, et éventuellement d'une source de gaz inerte sous pression. Cette solution accroît l'autonomie du système et simplifie le réapprovisionnement. Pour éviter les risques de contamination par stagnation et refoulement, les moyens d'obturation commandables sont alors placés à proximité immédiate de la buse. Ainsi, il n'y a pas de risque de prolifération bactériologique ou de contamination virale, puisque l'apport d'eau se fait directement dans la zone où se trouve le passager.

Dans tous les cas, l'humidité globale de l'air de la cabine n'est que peu augmentée, ce qui écarte les risques de corrosion. La masse supplémentaire à embarquer reste faible : il suffit de 400 millilitres d'eau pour porter à 40 % l'humidité relative de 51 m3 d'air sec, à 22° C et sous 810 millibars, c'est-à-dire dans des conditions d'ambiance classiquement rencontrées dans les avions.

De plus, l'invention propose un siège de passager pour aéronef à dispositif d'humidification selon la revendication 11.

Les caractéristiques ci-dessus ainsi que d'autres apparaîtront mieux à la lecture de la description qui suit de modes particuliers de réalisation, donnés à titre d'exemples non limitatifs.

La description se réfère aux dessins qui l'accompagnent dans lesquels :
- la figure 1 montre schématiquement divers modes d'implantation possibles des buses d'un dispositif comportant des installations individuelles autonomes ;
- la figure 2 est un schéma montrant une installation individuelle autonome, incluant un atomiseur du commerce fournissant un jet d'aérosol ;
- les figures 3A, 3B et 3C montrent trois constitutions possibles de l'actionneur électro-mécanique de l'installation de la figure 2 ;
- la figure 4 montre une autre disposition possible d'atomiseurs appartenant à des installations individuelles, permettant d'orienter le jet d'eau pulvérisée à l'état d'aérosol ;
- la figure 5 est une vue schématique depuis la gauche de la figure 4 ;
- la figure 6, similaire à la figure 4, montre une autre variante encore de réalisation ; et
- la figure 7, similaire à la figure 1, montre un dispositif à alimentation commune de plusieurs installations individuelles.

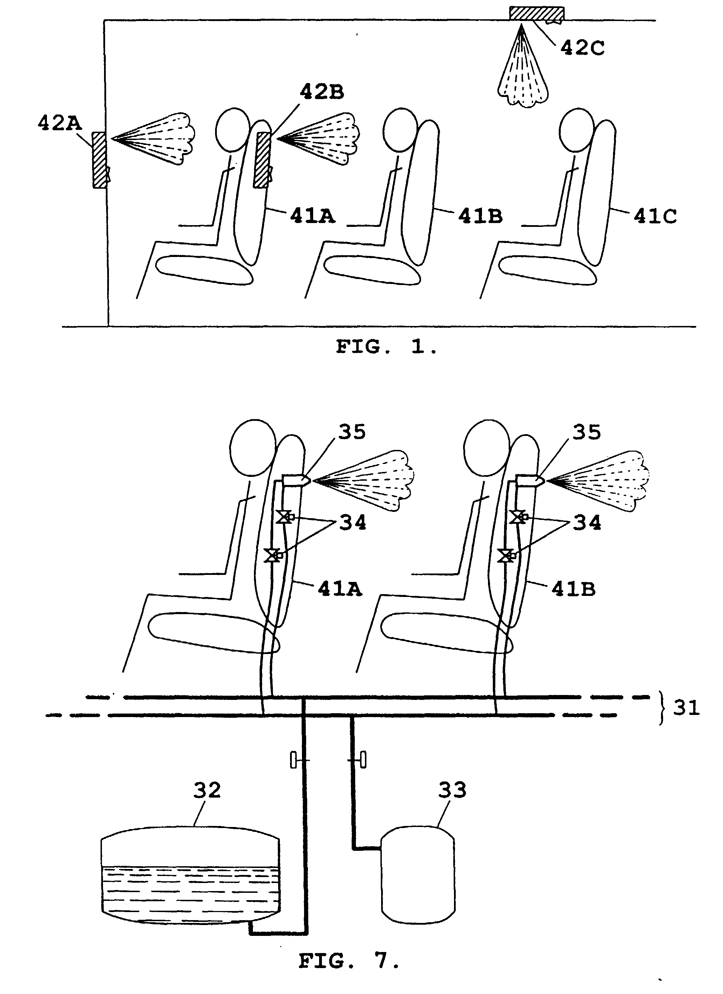

Le dispositif montré schématiquement en figure 1 comprend des installations individuelles, ayant chacune une réserve d'eau qui lui est propre. L'installation 42A, destinée à un passager occupant un siège 41A placé derrière une cloison, est incorporée dans cette cloison. L'installation 42B, destinée au passager d'un siège 41B, est placée dans le dossier du siège situé devant lui. Enfin, l'installation 42C, destinée à un autre passager occupant un siège 41C, est placée dans le plafond ou le coffre à bagages, au-dessus de lui. La buse de chaque installation permet d'envoyer de l'eau sous forme d'un jet d'aérosol 43 vers la partie supérieure du passager, dans un angle solide suffisant pour tenir compte des variations de taille et d'inclinaison du dossier du siège.

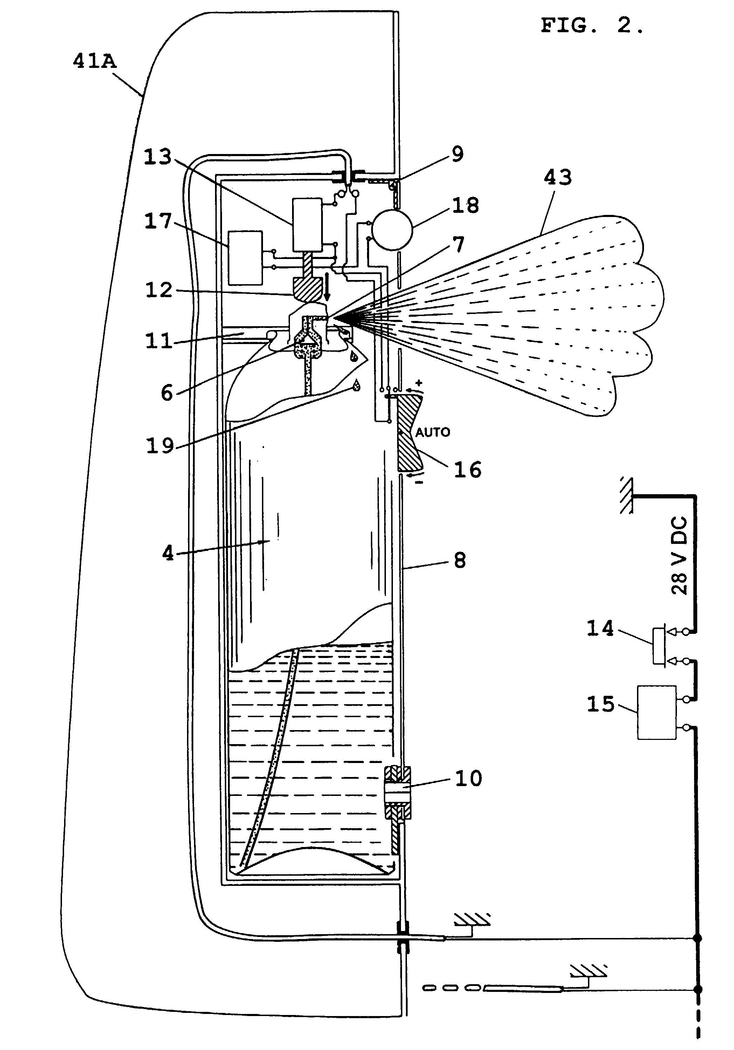

L'installation individuelle peut avoir la constitution montrée schématiquement en figure 2 dans le cas d'une installation placée dans le dossier d'un siège 41A.

Cette installation est prévue pour recevoir une cartouche ayant un réservoir contenant de l'eau et un gaz inerte (généralement de l'azote) sous pression, ainsi qu'une vanne actionnée par pression mécanique et une buse d'éjection. On peut notamment utiliser comme cartouche un atomiseur du commerce, de faible coût, à usage unique. Un tel atomiseur 4 est très léger. Il comporte un réservoir d'eau et de gaz et une tête supérieure regroupant la vanne 6 à ouverture par pression mécanique longitudinale et une buse 7. Les contenances, dimensions et caractéristiques des atomiseurs du commerce sont très similaires d'une marque à l'autre et de tels atomiseurs peuvent être approvisionnés facilement sur les aéroports. La pression de gaz est suffisamment faible pour ne pas provoquer de risques d'explosion, même en cas de dépressurisation complète de la cabine. Le remplacement d'un atomiseur par un autre est effectué aisément lors des escales par le personnel de maintenance ou de nettoyage, ou par le traiteur qui apporte les repas.

Dans le cas illustré sur la figure 2, l'atomiseur 4 est placé dans un réceptacle ménagé à cet effet dans le dossier du siège, derrière un couvercle 8 articulé par une charnière 9. Un verrou 10 manoeuvré à l'aide d'un outil spécial interdit toute manipulation par l'occupant du siège. L'atomiseur 4 peut être posé et retenu par des moyens désarmables, tels qu'une pince élastique 11.

Un guide peut être prévu dans le réceptacle pour que l'atomiseur ne puisse être mis en place que lorsque sa buse 7 est dirigée vers une fenêtre de sortie du jet d'aérosol 43.

La commande de l'atomiseur peut s'effectuer par des moyens de nature très variée.

Une solution simple consiste à prévoir, sur le dossier du siège, un levier permettant à l'occupant d'enfoncer la buse. Un amortisseur ou dash pot peut être prévu pour ralentir la fermeture de la vanne.

Plus fréquemment, la vanne sera commandée par des moyens électro-mécaniques. Dans le cas illustré sur la figure 2, chaque réceptacle destiné à recevoir un atomiseur 4 est équipé d'un actionneur électro-mécanique 13 ayant un doigt mobile 12 qui enfonce la buse 7 et ouvre la vanne lorsqu'il est alimenté électriquement par un circuit. Le circuit représenté comprend une commande collective et une commande individuelle. La première est constituée par un interrupteur 14 et/ou un régulateur 15. Si un régulateur est prévu, il peut être commandé par un capteur de degré hygrométrique, un processeur tenant compte des données de vol (durée du vol, altitude, etc...) ou encore imposant un cycle temporel déterminé. La "marche forcée" de tous les humidificateurs peut aussi être commandée automatiquement ou par un membre du personnel navigant (le pilote en général) en cas d'incendie. L'eau pulvérisée pourra ainsi absorber localement la chaleur dégagée par le feu, fixer certains polluants contenus dans la fumée, et enfin fournir une source d'eau au passager afin d'humidifier un linge à placer sur son visage.

La commande individuelle, qui complète ou remplace la régulation collective, comporte un contacteur à trois positions dans le cas représenté sur la figure 2 :
- + :: humidificateur en marche forcée
- auto :: humidificateur en mode régulé
- - :: humidificateur coupé.

En mode régulé, le fonctionnement peut être rendu intermittent en plaçant, en série sur les circuits d'alimentation, un organe de temporisation 17 et/ou un interrupteur 18 commandé par le degré hygrométrique. Un capteur de présence peut être prévu afin d'interdire le déclenchement de la vanne si un individu ou un objet se trouve trop près de la base. Ce capteur pourra fonctionner selon un principe optique, radar, infrarouge ou capacitif.

Les quelques gouttes 19 qui ne sont pas réduites à l'état de brouillard par la buse 7 ne sont pas éjectées dans la cabine. Elles peuvent être récupérées dans le réceptacle ou bien interceptées par un cache mobile qui coupe leur trajectoire au tout début de la pulvérisation.

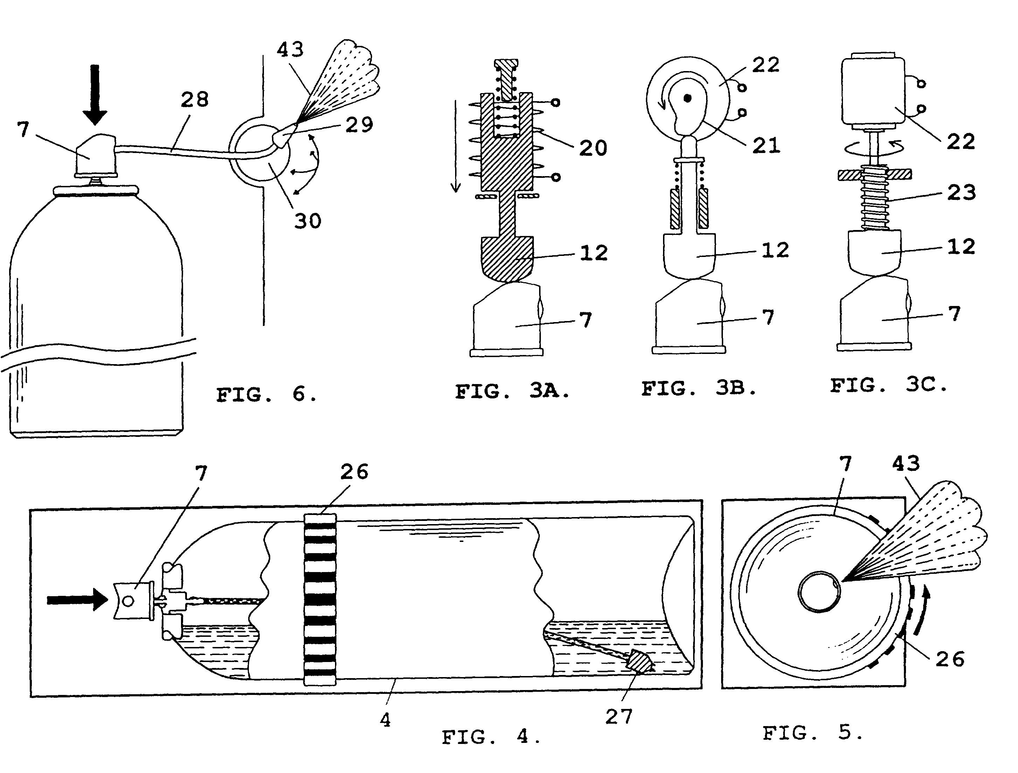

Les figures 3A, 3B et 3C montrent, à titre d'exemples, trois réalisations possibles de l'actionneur 13.

Dans le cas représenté en figure 3A, le doigt 12 est commandé par un électro-aimant alimenté à partir du contacteur 16.

Dans le cas de la figure 3B, l'actionneur est constitué par un moteur 22 entraînant en rotation une came 21 d'enfoncement du doigt 12.

Dans le cas de la figure 3C, l'actionneur comporte une vis sans fin 23 actionnée par un moteur rotatif 22. Le retour du doigt 12 est permis par réversion du moteur ou un mécanisme de débrayage de la vis parvenue en fin de course.

Les figures 4 et 5 montrent une variante de réalisation de l'invention dans laquelle l'atomiseur 4 est posé à plat dans un réceptacle et muni d'une mollette 26 accessible depuis l'extérieur et permettant d'orienter la buse 7. Dans ce cas le tube flexible 27 destiné à amener l'eau à la buse doit être muni d'un plongeur lesté. Cette disposition a l'inconvénient d'interdire l'utilisation d'un atomiseur du type couramment disponible dans le commerce.

Une autre solution permettant à l'occupant d'un siège d'orienter à volonté le jet 43 est montrée en figure 6. L'équipement individuel comprend alors un diffuseur 29 monté sur une rotule 30 et alimenté par un tube flexible 28 pouvant être emboîté dans la buse 7. L'orientation peut également être effectuée automatiquement par une tringlerie placée dans le dossier du siège, de façon que l'inclinaison du dossier provoque un changement d'orientation du diffuseur 29 tel que celui-ci reste dirigé vers le visage de l'occupant placé derrière le dossier.

La figure 7 décrit un dispositif dans lequel plusieurs buses d'atomisation 35 sont alimentées par un circuit commun puisant dans un réservoir d'eau 32. Ce réservoir peut être sous pression. Mais, étant donné son volume, il est plus avantageux d'utiliser une alimentation séparée en gaz 33. Les moyens d'obturation commandables comportent alors, pour chaque installation individuelle, deux électro-vannes 34 affectées l'une au réservoir d'eau, et l'autre à la source de gaz. Les vannes 34 peuvent être placées à proximité immédiate des buses correspondantes, ce qui réduit les risques de contamination qui existeraient dans un équipement d'humidification globale. Plusieurs réservoirs peuvent être répartis dans un avion de grande capacité.

## Revendications

1. Cabine d'aéronef avec dispositif d'humidification de l'air de la cabine, ledit dispositif comportant, pour les emplacements équipés destinés à être occupés, une buse individuelle d'atomisation dirigée vers une zone comportant la face de l'occupant et alimentée en eau par l'intermédiaire de moyens d'obturation commandables (14,15,16).

2. Cabine selon la revendication 1, caractérisé en ce que chaque buse est portée par un dossier de siège, le plafond, un coffre à bagages ou une cloison.

3. Cabine selon la revendication 1, caractérisé en ce que les moyens d'obturation commandables sont actionnés par l'intermédiaire d'une commande générale (14, 15) d'alimentation et par des commandes individuelles (16) de chaque installation.

4. Cabine selon l'une quelconque des revendications précédentes, caractérisé en ce que chaque buse d'atomisation est munie d'une réserve individuelle d'eau sous pression et constitue un atomiseur (4) de type commercial.

5. Cabine selon l'une quelconque des revendications précédentes, caractérisé en ce que la buse est orientable.

6. Cabine selon l'une quelconque des revendications 1 à 4, caractérisé en ce que chaque buse est reliée à un diffuseur orientable (29) par un tuyau souple (28).

7. Cabine selon la revendication 1, 2 ou 3, caractérisé en ce que chaque buse appartient à une cartouche ayant une réserve d'eau sous pression et est reliée à un tube à embout lesté et en ce que la cartouche est prévue pour être placée à plat et orientable.

8. Cabine selon la revendication 3, caractérisé en ce que chaque commande individuelle est prévue pour permettre à volonté de couper l'alimentation de la buse, de l'alimentater en permanence, ou de l'alimenter sous le contrôle de la commande générale.

9. Cabine selon la revendication 1 ou 2, caractérisé en ce que les buses d'atomisation sont alimentées par un circuit alimenté à partir d'un réservoir commun d'eau et d'une source de gaz inerte sous pression et en ce que les moyens d'obturation commandables de chaque buse sont placées à proximité immédiate de la buse.

10. Dispositif selon l'une quelconque des revendications 1 à 9, caractérisé par des moyens d'ouverture forcée de tous les moyens d'obturation, automatiquement en cas d'incendie ou par action d'un membre du personnel navigant.

11. Siège de passager (41A) pour aéronef, à dispositif d'humidification, le siège comprenant un dossier dans lequel est ménagé un réceptacle et le dispositif comprenant une cartouche ou atomiseur (4) placé dans le réceptacle ayant un réservoir d'eau et de gaz et une tête supérieure qui regroupe une vanne (6) à ouverture par pression mécanique actionnable par un passager situé derrière le siège et une buse (7) orientable pour permettre de la diriger vers le visage du passager situé derrière le siège.

## Claims

1. Aircraft cabin with a device for humidifying the air of the cabin, said device comprising, for the equiped locations designed to be occupied, an individual spray nozzle directed toward a zone including the face of the occupant and fed with water via controllable closure means (14,15,16).

2. Cabin according to claim 1, characterized in that each nozzle is carried by a seatback, a ceiling, a baggage rack, or a bulkhead.

3. Cabin according to claim 1, characterized in that the controllable closure means are actuated by an overall feed control (14,15) and by individual controls (16) for each installation.

4. Cabin according to any preceding claim, characterized in that each spray nozzle is provided with an individual supply of water under pressure and constitutes a commercial type spray (4).

5. Cabin according to any preceding claim, characterized in that the nozzle is aimable.

6. Cabin according to any one of claims 1 to 4, characterized in that each nozzle is connected to an aimable spraying outlet (29) via a flexible hose (28).

7. Cabin according to claim 1, 2 or 3, characterized in that each nozzle belongs to a cartridge having a supply of water under pressure and is connected to a dip tube having a weighted end, and the cartridge is designed to be placed horizontally and to be aimable.

8. Cabin according to claim 3, characterized in that each individual control is designed to enable supply to the nozzle to be switched off at will, to be powered continuously, or to be powered under overall control.

9. Cabin according to claim 1 or 2, characterized in that the spray nozzles are fed from a circuit that is itself fed from a common water tank and from a source of inert gas under pressure, and in that the controllable closure means for each nozzle are placed in the immediate proximity of the nozzle.

10. A system according to any one of claims 1 to 9, characterized by means for forced opening of all of the closure means automatically in the event of a fire or by action taken by a member of the flight crew.

11. Aircraft seat (41A) for an aircraft with an individual humidifying device, the seat comprising a back formed with a receptacle and the device comprising a cartridge or atomizer (4) located in the receptacle, having a can of water and gas and a higher head including a valve (6) opened by a mechanical pressure and actuable by a passenger who is located behind the seat and a nozzle (7) aimable for enabling to direct it toward the face of the passenger located behind the seat.

## Patentansprüche

1. Luftfahrzeugkabine mit einer Kabinenluftbefeuchtungsvorrichtung, wobei die Vorrichtung für die ausgestatteten Plätze, die dazu ausgelegt sind, durch einen Passagier besetzt zu werden, eine individuelle Zerstäuberdüse umfaßt, die auf einen die Vorderseite des Passagiers enthaltenden Bereich gerichtet ist und mittels steuerbarer Verschlußmittel (14, 15, 16) mit Wasser versorgt ist.

2. Kabine nach Anspruch 1, dadurch gekennzeichnet, daß jede Düse durch eine Sitzrückenlehne, die Decke, ein Gepäckfach oder eine Wand getragen ist.

3. Kabine nach Anspruch 1, dadurch gekennzeichnet, daß die steuerbaren Verschlußmittel mittels einer allgemeinen Versorgungssteuerung (14, 15) und mittels individueller Steuerungen (16) für jede Einrichtung betätigt werden.

4. Kabine nach einem der vorhergehenden Ansprüche, dadurch gekennzeichnet, daß jede Zerstäuberdüse mit einem individuellen Vorrat von Wasser unter Druck ausgestattet ist und einen Zerstäuber (4) gewerblichen Typs darstellt.

5. Kabine nach einem der vorhergehenden Ansprüche, dadurch gekennzeichnet, daß die Düse orientierbar ist.

6. Kabine nach einem der Ansprüche 1 bis 4, dadurch gekennzeichnet, daß jede Düse mittels eines flexiblen Schlauchs (28) mit einem orientierbaren Diffusor (29) verbunden ist.

7. Kabine nach Anspruch 1, 2 oder 3, dadurch gekennzeichnet, daß jede Düse zu einer Patrone mit einem Vorrat von Wasser unter Druck gehört und mit einem Rohr mit Ballastendstück verbunden ist, und daß die Patrone dazu ausgelegt ist, flach und orientierbar angeordnet zu sein.

8. Kabine nach Anspruch 3, dadurch gekennzeichnet, daß jede individuelle Steuerung dazu ausgelegt ist, wahlweise die Versorgung der Düse zu unterbrechen, sie ständig zu versorgen oder sie unter der Kontrolle der allgemeinen Steuerung zu versorgen.

9. Kabine nach Anspruch 1 oder 2, dadurch gekennzeichnet, daß die Zerstäuberdüsen durch einen Kreislauf versorgt werden, der ausgehend von einem gemeinsamen Wasserbehälter und einer Quelle unter Druck stehenden Inertgases versorgt wird, und daß die steuerbaren Verschlußmittel jeder Düse in unmittelbarer Nähe der Düse angeordnet sind.

10. Vorrichtung nach einem der Ansprüche 1 bis 9, gekennzeichnet durch Mittel zur Zwangsöffnung aller Verschlußmittel, automatisch im Falle eines Brands oder durch Betätigung durch ein Mitglied des Flugpersonals.

11. Passagiersitz (41A) für ein Luftfahrzeug mit einer Befeuchtungsvorrichtung, wobei der Sitz eine Rückensitzlehne umfaßt, in der eine Aufnahme vorgesehen ist, und wobei die Vorrichtung eine in der Aufnahme angeordnete Patrone oder Zerstäuber (4) enthält mit einem Wasserbehälter, einem Gasbehälter und einem oberen Kopf, der ein Ventil (6) zum Öffnen durch mechanischen Druck enthält, welches durch einen hinter dem Sitz befindlichen Passagier betätigbar ist, und eine orientierbare Düse (7) enthält, um zu ermöglichen, sie auf das Gesicht des hinter dem Sitz befindlichen Passagiers zu richten.
